# EUROPEAN PATENT APPLICATION

(11) **EP 0 527 293 A1**
(43) Date of publication of application: **17.02.1993**
(21) Application number: 92106133.9
(22) Date of filing: 09.04.1992
(51) Int. Cl.: B65H 27/00, F16C 13/00, B41F 13/08

(54) **Mandrel and relative sleeve, particularly for the presser roll of rotogravure printing machines**

(30) Priority: 19.04.1991 IT MI911087
(71) Applicant: ERMINIO ROSSINI S.P.A., I-20027 Rescaldina Milan (IT)
(72) Inventor: Rossini, Felice, I-20121 Milan (IT)
(74) Representative: Giambrocono, Alfonso, Dr. Ing.

(57) **Abstract**

The mandrel consists of a shaft (1) provided with at least two discs (4,7) which are axially positionable thereon and are radially expandable, said discs forming a support and locking means for a rubber-coated sleeve (12) acting as the presser, which is advantageously of glassfibre-reinforced plastic or an equivalent particularly light-weight material.

## Description

This invention relates to a mandrel and the relative sleeve, in particular for the presser roll of rotogravure printing machines. Presser rolls are known to generally consist of a rubber-coated sleeve forced over a mandrel in the form of a roller which also acts as the support shaft.

This conventional construction has two particular drawbacks, namely:
a) because of the length of the presser roll and because it is subjected to pressure acting on its ends, it undergoes flexure which results at its centre in a certain deflection which is in addition to the deflection formed in the underlying printing roll. In the central region defined by the two opposing rolls (presser and printing) a lack of contact therefore occurs, which is totally negative in terms of good print quality;
b) for various reasons known to the expert of the art, the sleeves have often to be removed and replaced, so that the constructions used up to the present time, for example a conical sleeve on a conical mandrel, are impractical.

An object of the invention is to provide a mandrel, in particular for the presser roll of rotogravure printing machines, which completely overcomes the aforesaid drawbacks.

This and further objects of the invention will be apparent to the expert of the art on reading the ensuing description.

The mandrel according to the invention is characterised essentially by consisting of a shaft provided with at least two discs which are axially positionable thereon and are radially expandable, said discs forming a support and locking means for a rubber-coated sleeve acting as the presser.

As mentioned in the introduction, the proposed solution enables the gap normally present between the presser roll and the printing roll to be reduced to a minimum, as said discs can be variously positioned axially along the shaft on the basis of the calculable deflection of the presser roll.

The radial expandability of the discs enables the sleeve to be locked on them. On contracting the discs the mandrel is released and can then be easily withdrawn from the sleeve.

In consideration of the aforegoing, according to a further characteristic of the invention, the rubber-coated sleeve has a self-supporting structure resistant to compression and expansion.

The mandrel according to the invention is illustrated by way of non-limiting example in the figures of the accompanying drawings, in which:
Figure 1 is a schematic section through the mandrel and the relative sleeve;
Figure 2 is a schematic view of a possible embodiment of the expandable discs; and
Figure 3 shows diagrammatically the forces acting on the presser roll on using the expandable discs.

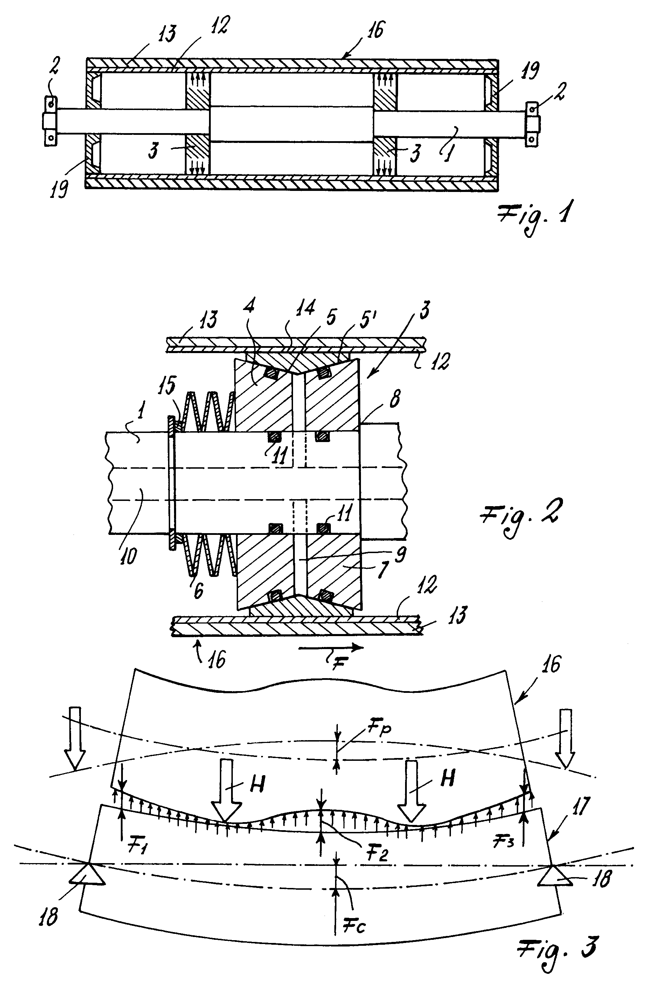

In Figure 1 the reference numeral 1 indicates a shaft supported at its ends by conventional bearings 2 or similar devices.

On the shaft 1 there are mounted two discs 3 which can be axially moved along the shaft to positions depending on the type of presser to be formed, which presser can vary in dimensions according to the type of printing machine used.

Each disc 3 is radially expandable by the action of a mechanical piston which as shown in Figure 2 consists of a conical element 4 operating on a first inclined surface 5, forming part of the disc 3, by the action of a compression spring 6 which embraces the shaft 1. Opposing the conical element 4 there is a further conical element 7 which abuts against a shoulder 8 on the shaft 1, and operates against a second inclined surface 5' also forming part of the disc 3.

Between the conical elements 4 and 7 there is an interspace 9 which is connected, via a duct 10 provided along the shaft 1, to a compressed air source (not shown). Annular gaskets 11 provide the required seal.

As can be seen in Figure 1, each disc 3 forms a support for a cylindrical sleeve of glassfibre-reinforced plastic 12 coated externally with a suitable rubber layer 13.

The outer surface 14 opposite the two inclined surfaces 5, 5' defines that part of the discs 3 which comes into contact with the inner surface of the sleeve 12, as heretofore stated.

With the disc 3 in its normal operating position, the spring 6, which is opposed by a ring 15 rigid with the shaft 1, urges the conical element 4 in the direction of the arrow F to hence expand the disc 3 and bring the surface 14 into intimate pressure contact with the inner surface of the sleeve 12, so locking the entire unit.

For removing and/or replacing the sleeve 12, the action of the compressed air moves the two conical elements 4 and 7 apart, to enable the disc 3 to contract radially.

With reference to Figure 3, the two arrows H represent the pressure transmitted by the overall presser roll, the deflection curve deriving therefrom also being shown.

In this figure the overall presser roll is indicated by 16, the printing roll by 17, this resting on end journals 18, the conventional presser deflection by fp, the normal printing roll deflection by fc, the resultant deflection of the conventional system by fc+fp, the resultant external deflection of the new system by f1=f3, and the resultant central deflection of the new system by f2, it being apparent that the resultant central deflection f2 is less than fp and hence the distance between the printing roll 17 and the presser 16 of the invention is less than the distance between a conventional printing roll and presser roll.

The use of a sleeve of glassfibre-reinforced plastic or equivalent material in combination with the particular structure of the mandrel makes the system particularly light in weight, with dynamic and inertia advantages.

Again with reference to Figure 1, because of the particular configuration of the shaft 1, the ends of the presser roll 16 are closed by flexible guards 19 for protection against any infiltration of ink or other materials into the roll 16.

## Claims

**1.** A mandrel and the relative sleeve, in particular for the presser roll of rotogravure printing machines, characterised by consisting of a shaft provided with at least two discs which are axially positionable thereon and are radially expandable, said discs forming a support and locking means for a rubber-coated sleeve acting as the presser.

**2.** A mandrel and the relative sleeve as claimed in claim 1, characterised in that said sleeve has a self-supporting structure.

**3.** A mandrel and the relative sleeve as claimed in claim 2, characterised in that said sleeve has an internal cylindrical surface, said surface cooperating with said discs when these latter are in their expanded state.

**4.** A mandrel and the relative sleeve as claimed in the preceding claims, characterised by comprising flexible elements for protecting and closing the ends of the sleeve.

**6.** A mandrel and the relative sleeve as claimed in the preceding claims, characterised in that the expansion of said discs is achieved by using conical elements cooperating with an outer ring of the disc, this disc pressing against the cylindrical inner surface of said sleeve.

**7.** A mandrel and the relative sleeve as claimed in claim 6, characterised in that said conical elements are normally operated by a spring for providing the locking action against said sleeve, and by a pressurized fluid for releasing said sleeve. All substantially as described, illustrated, claimed and for the objects indicated.
